# EUROPÄISCHE PATENTANMELDUNG

(11) **EP 0 698 669 A1**
(43) Veröffentlichungstag der Anmeldung: **28.02.1996**
(21) Anmeldenummer: 95110067.6
(22) Anmeldetag: 28.06.1995
(51) Int. Cl.: C22B 7/02, C21C 5/46

(54) **Verfahren zur Verwertung von Kunststoffabfällen und/oder kunststoffhaltigen Reststoffen und Eisenhüttenstäuben**

(30) Priorität: 29.07.1994 DE 4426929
(71) Anmelder: EKO Stahl GmbH, D-15872 Eisenhüttenstadt (DE)
(72) Erfinder: Kahle, Klaus-Peter, D-15890 Eisenhüttenstadt (DE); Schulz, Frank, D-15890 Pohlitz (DE)
(74) Vertreter: Wenzel, Klaus

(57) **Zusammenfassung**

Die Erfindung betrifft ein Verfahren zur Verwertung von Kunststoffabfällen und/oder kunststoffhaltigen Reststoffen unter Zugabe von Eisenhüttenstäuben, wie sie z. B. beim Betrieb von Sinteranlagen, Hochöfen und Stahlschmelzanlagen bzw. in Kalkbrenn- und -mahlanlagen in der Eisen- und Stahlindustrie anfallen, durch Einsatz derselben in einem Stahlschmelzaggregat, vorzugsweise in einem Sauerstoffkonverter oder Elektroofen.
Das erfindungsgemäße Verfahren ist dadurch gekennzeichnet, daß zerkleinerte chlor-, fluor- und cyanidfreie Kunststoffabfälle und/oder kunststoffhaltige Reststoffe aus der Entsorgung von Altfahrzeugen bzw. Altgeräten sowie Eisenhüttenstäube, wie Konverterstaub, Feinkalk o. dgl., einzeln oder miteinander vermischt, verdichtet und danach in dosierten Mengen mit einer Kunststoffummantelung versehen werden, die die verdichteten Stoffe allseitig umschließt und in diesem chargierfähigen Zustand der Hochtemperaturzone eines Stahlschmelzaggregats zugeführt werden.

## Beschreibung

Die Erfindung betrifft ein Verfahren zur Verwertung von Kunststoffabfällen und/oder kunststoffhaltigen Reststoffen unter Zugabe von Eisenhüttenstäuben, wie sie z. B. beim Betrieb von Sinteranlagen, Hochöfen und Stahlschmelzanlagen bzw. in Kalkbrenn- und -mahlanlagen in der Eisen- und Stahlindustrie anfallen, durch Einsatz derselben in einem Stahlschmelzaggregat, vorzugsweise in einem Sauerstoffkonverter oder Elektroofen.

Gegenwärtig sind Verfahren bekannt, die den Einsatz der Eisenhüttenstäube in brikettierter oder pelletierter Form in Stahlschmelzöfen zum Inhalt haben. Diese Staubbriketts haben infolge des meist hohen Kalkanteils in den üblichen Stäuben die Eigenschaft, unter dem Einfluß der Luftfeuchte zu zerfallen, was die Transport- und Umschlagprozesse erschwert und den Anteil des Staubes erhöht, der bei der Zugabe der Briketts in das Schmelzaggregat ohne Reaktion mit der Schmelze über das Abgassystem sofort wieder aus dem Ofen ausgetragen wird und erneut in die Filter gelangt. Gleichzeitig beeinflußt die Zugabe der primär aus Oxiden bestehenden Stäube die Wärmebilanz der Öfen negativ, was zu erhöhtem Energieeinsatz pro Tonne Flüssigstahl führt.

Zur umweltgerechten Entsorgung von Altfahrzeugen und Altgeräten ist es bekannt, die in den Shredderanlagen anfallende und einen hohen Kunststoffanteil aufweisende Leichtfraktion einer Verwertung in einem Schachtofen zuzuführen. Ein derartiges Verfahren ist z.B. in der DE-OS 4104 252 beschrieben. Gemäß diesem Verfahren werden Shredder-Rückstände mit einem hohen Kunststoffanteil durch Zusatz von Klärschlamm in einen fließfähigen Zustand gebracht und danach über die Windformen der Hochtemperaturzone eines Hochofens zugeführt. Neben dieser Lösung sind weitere Verfahren zur Gewinnung von Einsatzstoffen aus der Abfallentsorgung bekannt (siehe auch DE 4123028), die ausgehend von den immer strenger werdenden Umweltbestimmungen auf eine umweltschonende Verwertung derartiger Stoffe in einem metallurgischen Schachtofen orientieren.

Aufgabe der Erfindung ist es ein Verfahren zu finden, mit dem chlor-, fluor- und cyanidfreie Kunststoffabfälle und/oder kunststoffhaltige Reststoffe aus der Entsorgung von Altfahrzeugen und Altgeräten zusammen mit Eisenhüttenstäuben, wie sie beim Betrieb von Haupt- und Nebenanlagen der Eisen- und Stahlindustrie anfallen, einem Stahlschmelzaggregat zur umweltschonenden Verwertung zugeführt werden.

Erfindungsgemäß wird die Aufgabe dadurch gelöst, daß zerkleinerte chlor-, fluor- und cyanidfreie Kunststoffabfälle und/oder kunststoffhaltige Reststoffe aus der Entsorgung von Altfahrzeugen bzw. Altgeräten sowie Eisenhüttenstäube, wie Konverterstaub, Feinkalk o. dgl., einzeln oder miteinander vermischt, verdichtet und danach in dosierten Mengen mit einer Kunststoffummantelung versehen werden, die die verdichteten Stoffe allseitig umschließt und in diesem chargierfähigen Zustand der Hochtemperaturzone eines Stahlschmelzaggregats zugeführt werden.

Die Verdichtung des aus Kunststoffabfällen und/oder kunststoffhaltigen Reststoffen sowie Eisenhüttenstäuben bestehenden Gemisches kann dabei unter Wärmeeinwirkung erfolgen, wobei die Kunststoffabfälle bzw. kunststoffhaltigen Reststoffe anschmelzen und somit eine teilweise Bindung mit den staubigen Bestandteilen eingehen.

Das Gemisch aus Eisenhüttenstäuben und Kunststoffabfällen und/oder kunststoffhaltigen Reststoffen ist dabei vorzugsweise so zusammengesetzt, daß der thermische Effekt aus der Kunststoffverbrennung einschließlich der verwendeten Kunststoffummantelung den Wärmeverlust, der durch die Schmelzreduktion des oxidischen Anteils des Eisenhüttenstaubes verursacht wird, kompensiert oder überkompensiert wird. Verfahrensgemäß erfolgt dies bei einem Masseverhältnis zwischen Kunststoffanteil und Anteil an Eisenhüttenstäuben in einem Intervall von 20:80 bis 50:50. Unabhängig von dieser zweckmäßigerweise bevorzugten Ausführung ist es jedoch auch möglich, daß in der Kunststoffummantelung nur Eisenhüttenstäube oder nur Kunststoffabfälle und/oder kunststoffhaltige Reststoffe eingelagert sind und in dieser Form die Verwertung in einem Stahlschmelzaggregat wie z.B. einem Konverter oder Elektroofen erfolgt.

Mit der erfingungsgemäßen Nutzung von Kunststoffabfällen bzw. kunststoffhaltigen Reststoffen als Energiequelle in Verbindung mit dem Einsatz von staubförmigen Abfallstoffen aus dem Betrieb von Haupt- und Nebenanlagen der Eisen- und Stahlindustrie wurde eine Lösung gefunden, die eine umweltschonende Verwertung derartiger energie- und rohstoffreicher Abfallstoffe ermöglicht und somit zu einer wesentlichen Entlastung der ohnehin begrenzten Deponiekapazitäten beiträgt.

Die erfindungsgemäße Lösung soll nachfolgend an einem Beispiel zur Verwertung von Konverterstaub, welcher beim Betrieb eines LD-Konverters in dessen Abgasanlage anfällt, und geshredderten Polyäthylenabfällen näher erläutert werden. Konverterstaub mit einer Zusammensetzung aus
52,4 % FeOn
21,0 % SiO₂
26,0 % CaO
0,5 % MgO
0,1 % Al₂O₃
wird nach diesem Verfahren mit geshredderten Polyäthylenabfällen in einem Massenverhältnis von 70 : 30 in einem Extruder gemischt und verdichtet. Die Verdichtung der eingesetzten Abfallstoffe erfolgt dabei unter einer derartigen Wärmeeinwirkung, bei der die Polyäthylenabfälle aufschmelzen, wodurch ein Teil des Konverterstaubes gebunden wird. Dieses verdichtete und in teilweise gebundener Form vorliegende Gemisch wird am Extruderaustritt in eine Schlauchfolie aus Polyäthylen gepreßt und dabei gleichzeitig in chargierfähige Längenabschnitte unterteilt, wobei die Unterteilung so erfolgt, daß die damit jeweils dosierte Menge des verdichteten Gemisches allseitig durch eine Kunststoffummantelung verschlossen ist.

Die zur Ummantelung des verdichteten Gemisches aus Konverterstaub und Polyäthylenabfällen verwendete Schlauchfolie kann dabei ebenfalls aus recycelten Kunststoffabfällen hergestellt sein. Die Kunststoffummantelung muß dabei so stabil sein, daß sie die erforderlichen Transport- und Umschlagoperationen bis zur Einbringung des Konverterstaubes und Kunststoffabfalls in die Hochtemperaturzone eines Konverters mit Sicherheit überstehen. Vorzugsweise beträgt das Gewicht der einzelnen ummantelten Mengen des verdichteten Gemisches ca. 15 kg. Ihre Zugabe in die Hochtemperaturzone eines Konverters erfolgt gemäß diesem Beispiel im ersten Blasdrittel in zwei Portionen zu je 1000 kg bezogen auf ein Abstichgewicht von ca. 220 t Rohstahl.

## Patentansprüche

1. Verfahren zur Verwertung von Kunststoffabfällen und/oder kunststoffhaltigen Reststoffen und Eisenhüttenstäuben in einem Stahlschmelzaggregat, dadurch gekennzeichnet, daß die zerkleinerten Kunststoffabfälle und/oder kunststoffhaltigen Reststoffe aus der Entsorgung von Altfahrzeugen bzw. Altgeräten sowie die Eisenhüttenstäube, wie Konverterstaub, Feinkalk o.dgl., einzeln oder miteinander vermischt, verdichtet und danach in dosierten Mengen mit einer Kunststoffummantelung versehen werden, die die verdichteten Stoffe allseitig umschließt und in diesem chargierfähigen Zustand der Hochtemperaturzone eines Stahlschmelzaggregats zugeführt werden.

2. Verfahren nach Anspruch 1, dadurch gekennzeichnet, daß die Kunststoffabfälle und/oder kunststoffhaltigen Reststoffe mit den Eisenhüttenstäuben vorzugsweise in einem Masseverhältnis von 20 : 80 bis 50 : 50 vermischt werden.

3. Verfahren nach Anspruch 1 und 2, dadurch gekennzeichnet, daß das Gemisch aus Kunststoffabfällen und/oder kunststoffhaltigen Reststoffen und Eisenhüttenstäuben unter Wärmeeinwirkung verdichtet wird.

4. Verfahren nach Anspruch 1, 2 und 3, dadurch gekennzeichnet, daß die Kunststoffabfälle und/oder kunststoffhaltigen Reststoffe chlor-, fluor- und cyanidfrei sind.
